# EUROPÄISCHE PATENTSCHRIFT

(11) **EP 4 030 024 B1**
(45) Veröffentlichungstag und Bekanntmachung des Hinweises auf die Patenterteilung: **26.07.2023**
(21) Anmeldenummer: 22150663.7
(22) Anmeldetag: 10.01.2022
(51) Int. Cl.: E05B 79/20, E05B 85/02, F16C 1/22

(54) **KRAFTFAHRZEUGSCHLOSS**
MOTOR VEHICLE LOCK
SERRURE DE VÉHICULE AUTOMOBILE

(30) Priorität: 12.01.2021 DE 102021100390
(43) Veröffentlichungstag der Anmeldung: 20.07.2022
(73) Patentinhaber: Kiekert AG, 42579 Heiligenhaus (DE)
(72) Erfinder: Fuchs, Carsten, 45239 Essen (DE); Sohlbach, Andreas, 45478 Mülheim (DE); Handke, Armin, 47269 Duisburg (DE); Ochtrop, Matthias, 46284 Dorsten (DE)

(56) Entgegenhaltungen:
- KR-B1- 102 003 882
- US-B2- 10 151 124
- US-B2- 10 781 849

## Beschreibung

Die Erfindung betrifft ein Kraftfahrzeugschloss aufweisend ein Gesperre mit einer Drehfalle und mindestens einer Sperrklinke, ein Kunststoffgehäuse, einen Bowdenzug, wobei ein freies Ende des Bowdenzugs, insbesondere ein Bowdenzugmantel, in das Kunststoffgehäuse einfügbar und im Kraftfahrzeugschloss montierbar ist und ein einstellbares Befestigungsmittel für das freie Ende des Bowdenzugmantels im Kunststoffgehäuse, wobei zumindest ein Teil eines Montagebereichs des freien Endes mittels eines bewegbar am Gehäuse befestigten Deckels verschließbar ist.

Zur Kraftübertragung werden in heutigen Kraftfahrzeugen oftmals Bowdenzüge eingesetzt, die eine externe Krafteinleitung flexibel über eine Distanz übertragen und zielgerichtet in eine Funktionseinheit einleiten können. So kommen beispielsweise Bowdenzüge dort zum Einsatz, wo mittels zum Beispiel eines Türaußengriffs eine Kraft an ein Kraftfahrzeugschloss übertragen werden soll, so dass ein mechanisches Öffnen des Kraftfahrzeugschlosses ermöglicht wird. Als Funktionseinheit dient hierbei das Kraftfahrzeugschloss.

Neben dem Türgriff ist es aber auch vorstellbar und aus dem Stand der Technik bekannt, den Bowdenzug zwischen einer extern angeordneten Zuzieheinrichtung und einem Kraftfahrzeugschloss einzusetzen. Mittels des Bowdenzugs kann dann die in der Zuzieheinrichtung erzeugte Kraft mittels des Bowdenzugs an das Kraftfahrzeugschloss übertragen werden. Hierbei ist es beispielsweise vorstellbar, dass mittels der Zuzieheinrichtung ein automatisches Überführen eines im Schloss befindlichen Gesperres von einer Vorrastposition in eine Hauptrastposition erfolgt. Der Einsatz eines Bowdenzugs im Zusammenspiel mit einem Kraftfahrzeugschloss kann folglich in vielfacher Weise erfolgen, wobei die Einsatzgebiete des Bowdenzugs an die Anforderungen im Kraftfahrzeug anpassbar sind und verschiedene Anschlussmöglichkeiten bietet.

Der Bowdenzug selbst besteht aus einer Bowdenzugseele, die aus einem Drahtseil besteht, wobei das Drahtseil an seinem Ende ein Montagemittel aufweist, wobei das Montagemittel beispielsweise ein fest mit dem Drahtseil verbundener Montagehaken sein kann. Die Bowdenzugseele ist in einem Bowdenzugmantel geführt, der als Führungselement für die Bowdenzugseele dient und den Vorteil bietet, dass eine Kraftübertragung auch umleitbar ist. Der Bowdenzug kann somit auch dort eingesetzt werden, wo eine unmittelbare Verbindung der Funktionseinheit mit dem Kraftfahrzeugschloss nicht möglich ist. Der Bowdenzugmantel ist bevorzugt aus Kunststoff gebildet und kann eine Metalleinlage als dauerstabile Anlagefläche für die Bowdenzugseele aufweisen. An den Enden des Bowdenzugmantels sind bevorzugt Befestigungsmittel vorgesehen, die es ermöglichen, die freien Enden des Bowdenzugmantels in die Funktionseinheit und/oder das Kraftfahrzeugschloss einzuführen und den Bowdenzug zu montieren. Um eine ordnungsgemäße und spielfreie Montage des Bowdenzugs zu gewährleisten, ist es im Bereich des Montagemittels möglich, den Bowdenzug in Bezug auf das Kraftfahrzeugschloss einzustellen. Hierzu sind Lösungen aus dem Stand der Technik bekannt geworden.

In der DE 10 2013 203 166 A1 ist eine Vorrichtung offenbart, mit der das Einstellen eines Bowdenzugs in Bezug auf ein Kraftfahrzeugschloss einstellbar und montierbar ist. Die Bowdenzugseele wird dabei mittels eines Hakens mit dem Kraftfahrzeugschloss verbunden, wobei ein Befestigungsmittel vorgesehen ist, mit dem ein gegebenenfalls vorliegendes Spiel zwischen dem Bowdenzugmantel und der Bowdenzugseele bzw. dem mit der Bowdenzugseele verbundenen Bestandteil des Kraftfahrzeugschlosses ausgleichbar ist. Wird der Bowdenzug am Gehäuse des Kraftfahrzeugschlosses montiert und die Bowdenzugseele mit dem Kraftfahrzeugschloss verbunden, so kann es vorkommen, dass es aufgrund eines Spiels zwischen dem Anschlussbauteil und der Bowdenzugseele bzw. dem Bowdenzugmantel ausgeglichen werden muss. Zum Spielausgleich ist am Gehäuse eine Rastkontur vorgesehen, die mittels eines Feststellmittels ein Verrasten des Bowdenzugmantels mit dem Kraftfahrzeugschlossgehäuse ermöglicht. Das Feststellmittel ist in dieser Ausführungsform als Clip ausgeführt, wobei Rastzähne zwischen dem Feststellmittel und dem Gehäuse ein spielfreies Einstellen bzw. Montieren des Bowdenzugs mit dem Kraftfahrzeugschloss ermöglichen.

Eine weitere Möglichkeit zur Befestigung eines Bowdenzugs an einem Kraftfahrzeugschloss ist aus der US 2010/0072761 A1 bekannt geworden. Die Druckschrift offenbart eine Montage eines Bowdenzugs an einem Gehäuse eines Kraftfahrzeugschlosses, wobei der Bowdenzugmantel mit Haltelippen ausgestattet ist, die in Nuten des Gehäuses einlegbar bzw. montierbar sind. Um den Montagebereich am freien Ende des Bowdenzugmantels und den Anschlussbereich der Bowdenzugseele mit dem Kraftfahrzeug abzudecken und somit vor äußeren Einflüssen zu schützen, offenbart die Druckschrift einen bewegbar am Gehäuse befestigten Deckel. Der Deckel weist eine Öffnung auf, die mit der Haltelippe des Bowdenzugs in Eingriff bringbar ist und somit neben dem Abdecken zusätzlich zum Fixieren des Bowdenzugs am Kraftfahrzeugschloss nutzbar ist. Der Deckel ist einstückig mit einem Seitendeckel des Gehäuses ausgebildet und kann in Bezug auf den Bowdenzug bewegt werden.

Aus der US 10 151 124 B1 ist ein Kraftfahrzeugschloss gemäß dem Oberbegriff des Anspruchs 1 mit einem Gesperre, einem Gehäuse, das zumindest einen Deckel umfasst, und mit einem Bowdenzug bekannt, wobei der Bowdenzug mittels des Deckels in einer Montageposition fixierbar ist.

Die aus dem Stand der Technik bekannten Lösungen zur Montage eines Bowdenzugs an ein Kraftfahrzeugschloss haben sich grundsätzlich bewährt. Ein Ziel der Automobilindustrie ist es aber immer, eine minimale Anzahl von Bauteilen zu erreichen und ein leichtes Montieren des Kraftfahrzeugschlosses zu ermöglichen. Hier setzt die Erfindung an.

Aufgabe der Erfindung ist es, ein verbessertes Kraftfahrzeugschloss bereitzustellen. Insbesondere ist es Aufgabe der Erfindung, eine erleichterte Montage des Bowdenzugs zu ermöglichen und gleichzeitig die Anzahl der zur Montage benötigten Bauteile zu reduzieren. Darüber hinaus ist es Aufgabe der Erfindung, eine kostengünstige und konstruktiv einfache Möglichkeit einer Montage eines Bowdenzugs bereitzustellen.

Die Lösung der Aufgabe erfolgt durch die Merkmale des unabhängigen Patentanspruchs 1. Vorteilhafte Ausgestaltungen der Erfindung sind in den Unteransprüchen angegeben. Es wird darauf hingewiesen, dass die im Folgenden beschriebenen Ausführungsbeispiele nicht beschränkend sind, es sind vielmehr beliebige Variationsmöglichkeiten der in der Beschreibung und den Unteransprüchen sowie den Figuren beschriebenen Merkmale möglich.

Die Erfindung geht aus von einem Kraftfahrzeugschloss, aufweisend ein Gesperre mit einer Drehfalle und mindestens einer Sperrklinke, ein Kunststoffgehäuse, einen Bowdenzug, wobei ein freies Ende des Bowdenzugs, insbesondere ein Bowdenzugmantel, in das Kunststoffgehäuse einfügbar und im Kraftfahrzeugschloss montierbar ist, und ein einstellbares Befestigungsmittel für das freie Ende des Bowdenzugmantels im Kunststoffgehäuse vorgesehen ist, wobei zumindest ein Teil eines Montagebereichs des freien Endes mittels eines bewegbar am Gehäuse befestigten Deckels verschließbar ist und wobei der Bowdenzug mittels des Deckels in einer eingestellten Montageposition fixierbar ist. Erfindungsgemäß ist das Befestigungsmittel als Einstellschraube ausgebilde, die mit einem Gewinde am Bowdenzug zusammenwirkt. Durch den erfindungsgemäßen Aufbau des Kraftfahrzeugschlosses ist nun die Möglichkeit geschaffen, den Bowdenzug nach dem Einstellen mittels des Befestigungsmittels sicher und mit einfachsten konstruktiven Mitteln im Kraftfahrzeugschloss zu fixieren.

Das Befestigungsmittel wirkt dabei unmittelbar mit dem Bowdenzugmantel zusammen. Der Bowdenzugmantel besteht bevorzugt aus einem Kunststoffmaterial, so dass ein Gewinde leicht in den Bowdenzugmantel einformbar ist. Dient nun die Einstellschraube gleichzeitig als Anschlag für den Bowdenzug im Kraftfahrzeugschloss, so kann mittels eines Verstellens der Einstellschraube die Montageposition des freien Bowdenzugendes in Bezug auf das Kraftfahrzeugschlossgehäuse eingestellt werden. Ein Spiel zwischen Bowdenzug bzw. Bowdenzugseele und einem Anschlussbauteil im Kraftfahrzeugschloss kann somit leicht ausgeglichen werden.

Insbesondere die Verwendung des Deckels zur Befestigung bzw. Fixierung des Bowdenzugs im Kraftfahrzeugschloss ermöglicht es hierbei, ohne weitere konstruktive Mittel den Bowdenzug im Kraftfahrzeugschloss zu montieren. Durch das Verwenden des Deckels zur Montage des Bowdenzugs wird ebenfalls die Montage erleichtert. Der Deckel kann dabei einerseits ein Abdecken des Montagebereichs ermöglichen und andererseits zur Fixierung bzw. Festlegung der Position des Bowdenzugs in Bezug auf das Kraftfahrzeugschloss dienen. Die Montage wird insbesondere dadurch erleichtert, dass kein zusätzliches Bauteil zum Fixieren des einmal eingestellten Zustands des Bowdenzugs notwendig ist. Mit anderen Worten kann der Bowdenzug im Kraftfahrzeugschloss montiert werden, anschließend kann der Bowdenzug bzw. der Bowdenzugmantel relativ zum Kraftfahrzeugschloss eingestellt werden und abschließend kann die eingestellte Position des Bowdenzugmantels in Bezug auf das Kraftfahrzeugschloss fixiert werden. Der Deckel dient somit als Fixierhilfe bei der Montage des Bowdenzugs, wodurch eine Reduzierung der zur Montage des Bowdenzugs notwendigen Bauteile ermöglicht wird.

In einer Weiterbildung der Erfindung ist eine Montageposition des freien Endes des Bowdenzugs mittels des Befestigungsmittels in Bezug auf das Kraftfahrzeugschloss einstellbar. Das freie Ende des Bowdenzugs, welches mit dem Kraftfahrzeugschloss verbunden wird, kann ein Anschlussstück aufweisen, wobei das Anschlussstück formschlüssig und beispielsweise verschiebbar in das Gehäuse des Kraftfahrzeugschlosses einlegbar ist. Der Bowdenzug bzw. das Bowdenzugende ist dann relativ zum Gehäuse des Kraftfahrzeugschlosses führbar im Gehäuse gehalten. Mittels des Befestigungsmittels, welches beispielsweise über das Anschlussstück stülpbar oder am Anschlussstück befestigbar ist, kann dann ein Einstellen der Montageposition erfolgen. Somit ist die Möglichkeit geschaffen, das freie Ende des Bowdenzugs in Bezug auf das Gehäuse des Kraftfahrzeugschlosses einzustellen und folglich die Lage des freien Endes in Bezug auf eine Anbindung des Bowdenzugs an die Bestandteile des Kraftfahrzeugschlosses anzupassen.

Wird der Bowdenzug am Kraftfahrzeugschlossgehäuse montiert, wobei beispielsweise das freie Ende bzw. das Anschlussstück in das Gehäuse eingelegt wird und die Bowdenzugseele beispielsweise mit einem am Ende der Bowdenzugseele montierten Nippel in einen zum Beispiel Außenbetätigungshebel eingefügt, so kann es vorkommen, dass ein Spiel in der Hebelmechanik auszugleichen ist. In diesem Fall würde der Nippel mit Spiel im Außenbetätigungshebel anliegen, was zu unerwünschten Geräuschen führen könnte. Durch die Einstellbarkeit des freien Endes des Bowdenzugmantels in Bezug auf das Kraftfahrzeugschlossgehäuse kann dieses Spiel ausgeglichen werden.

Weiterhin vorteilhaft kann es sein und eine Ausgestaltungsform der Erfindung darstellen, wenn das Befestigungsmittel selbst am Bowdenzug angeordnet ist. Wird das Befestigungsmittel, mit dem die Montageposition des freien Endes des Bowdenzugs einstellbar ist, unmittelbar am Bowdenzug selbst angeordnet, so wird die Montage des Bowdenzugs zusätzlich erleichtert. Der Bowdenzug ist somit unmittelbar mit dem Befestigungsmittel verbunden und kann bei der Montage als ein Montagebauteil dem Kraftfahrzeugschloss zugeführt werden. Hierdurch wird die Anzahl der Bauteile, die zum Montieren und Einstellen des Bowdenzugs notwendig sind, auf ein Minimum reduziert.

In einer weiteren vorteilhaften Ausgestaltung der Erfindung weist die Einstellschraube ein umfängliches Eingriffsmittel, insbesondere eine Verzahnung, auf. Wird die Einstellschraube mit einer bevorzugt vollumfänglichen Verzahnung ausgebildet, so ist ein leichtes, auch manuelles Einstellen der Montageposition ermöglicht. Eine Verzahnung lässt sich auch leicht manuell ergreifen und einstellen, so dass ein exaktes Positionieren des freien Endes in Bezug auf das Kraftfahrzeugschloss leicht möglich ist. Darüber hinaus kann eine Verzahnung auch automatisiert einstellbar sein, da hierzu lediglich ein weiteres Zahnrad in das Befestigungsmittel eingreifen muss. Die Einstellschraube ist bevorzugt ebenfalls aus einem Kunststoffmaterial gebildet, so dass einerseits günstige Reibverhältnisse zwischen dem Bowdenzugmantel und der Einstellschraube herstellbar sind und andererseits eine kostengünstige Lösung für ein Befestigungsmittel bereitstellbar ist.

Ist der Deckel formschlüssig mit dem Befestigungsmittel in Eingriff bringbar, so folgt hieraus eine weitere vorteilhafte Ausgestaltungsform der Erfindung. Wird der Deckel selbst zum Mittel des Fixierens des Befestigungsmittels, so kann auf weitere Bauteile zum Festlegen der Montageposition verzichtet werden. Hier zeigen sich die Vorteile des erfindungsgemäßen Ausführungsbeispiels besonders deutlich. Einerseits kann das Befestigungsmittel als Einstellschraube ausgebildet sein und somit unmittelbar mit dem Bowdenzug am Kraftfahrzeugschloss montiert und eingestellt werden und andererseits stellt das Kraftfahrzeugschlossgehäuse unmittelbar ein Fixiermittel für den einmal eingestellten Bowdenzug zur Verfügung. Somit kann die Anzahl der benötigten Bauteile zum Einstellen der Montageposition auf ein Minimum reduziert werden. Darüber hinaus wird auch die Montage deutlich erleichtert, da lediglich der Bowdenzug im Kraftfahrzeugschloss eingehängt, eingelegt und eingestellt werden muss und anschließend ein Fixieren der Montageposition durch den Deckel, als Teil des Kraftfahrzeugschlossgehäuses, zum endgültigen Fixieren der Lage des Bowdenzugs dienen kann.

In weiterhin vorteilhafter Weise kann der Deckel selbst eine Eingriffskontur aufweisen, die mit dem Befestigungsmittel in Eingriff bringbar ist. Ist am Deckel eine Eingriffskontur vorhanden, die auch zum Beispiel aus einem separaten Bauteil gebildet sein kann, so kann die Eingriffskontur eine zusätzliche Fixierung des Befestigungsmittels herbeirufen. Der Deckel wirkt dann als Positioniersicherung und kann durch die Eingriffskontur sich unmittelbar formschlüssig an das Befestigungsmittel anfügen. Die Eingriffskontur ermöglicht hierdurch ein weiteres Sichern der Position des Befestigungsmittels, wodurch eine dauerstabile Lagesicherung für den einmal eingestellten Bowdenzug bereitstellbar ist. Dabei kann die Eingriffskontur auch einstückig mit dem Deckel ausgebildet sein. Die Eingriffskontur kann als separates Bauteil und beispielsweise aus einem gummielastischen Werkstoff bestehen und am Deckel befestigt sein oder selbst einstückig mit dem Deckel ausgebildet sein. Durch eine einstückige Ausbildung von Deckel und Kontur ist die Anzahl der zur Montage des Kraftfahrzeugschlosses notwendigen Bauteile auf ein Minimum reduzierbar. Die Montage wird erleichtert und stellt eine vorteilhafte Möglichkeit dar, um die Anzahl der Montageschritte zu reduzieren.

Durch die Eingriffskontur kann die Einstellschraube in der eingestellten Position gesichert werden. Hierdurch erfährt die Einstellschraube eine radiale Sicherung, das heißt eine umfängliche Sicherung. Der mechanische, vorzugsweise formschlüssige Eingriff der der Eingriffskontur in die äußere Oberfläche, insbesondere eine Verzahnung, der Einstellschraube verhindert dabei, dass sich die Einstellschraube verdrehen und somit verstellen kann.

Neben der radialen Sicherung der Einstellschraube mittels der Eingriffskontur ist es erfindungsgemäß auch vorstellbar, dass am Deckel zusätzlich oder alternativ eine axiale Sicherung für die Einstellschraube vorsehbar ist. In dieser Ausführungsform weist der Deckel zumindest einen Steg auf, wobei der Steg in axialer Richtung an die Einstellschraube anlegbar bzw. anfügbar ist. Der Deckel verfügt in dieser Ausführungsform über zumindest einen Steg, der am Deckel angeordnet, bevorzugt einstückig mit dem Deckel ausgebildet ist, und der sich in axiale Richtung an die Einstellschraube anlegt. Der Steg kann ist dabei auch als Wand oder Sicherungswand für die Einstellschraube beschreibbar. Vorstellbar ist es natürlich auch, dass zwei, vorzugsweise parallele Stege am Deckel angeordnet sind, so dass die Stege und der Deckel die Einstellschraube u-förmig umgreifen. Ein Lösen der Einstellschraube in axiale Richtung kann mit einem oder zwei Stegen wirkungsvoll verhindert werden, da eine Bewegung der Einstellschraube entlang des Gewindes in axiale Richtung durch den Steg unterbindbar ist, die Einstellschraube wird in ihre Bewegung gehemmt.

Ist der Deckel mit dem Kunststoffgehäuse des Kraftfahrzeugschlosses verrastbar, so kann eine weitere Ausgestaltungsvariante der Erfindung bereitgestellt werden. Der Deckel selbst kann mittels eines Filmscharniers an das Gehäuse bzw. einen Teil des Gehäuses des Kraftfahrzeugschlosses angebunden sein. Darüber hinaus kann der Deckel die Eingriffskontur selbst enthalten und somit ein sicheres Montieren und Fixieren des Bowdenzugs ermöglichen. Wird nun weiterhin am Deckel selbst eine Möglichkeit vorgesehen, mittels derer der Deckel mit dem Kraftfahrzeugschlossgehäuse verrastbar ist, so kann auf weitere Montagemittel für den Deckel verzichtet werden. So ist es beispielsweise vorstellbar, dass in den Deckel eine Öffnung eingeformt ist, die mit einer Rastkontur am Gehäuse zusammenwirkt und somit den Deckel fixiert und/oder es liegt eine Verlängerung am Deckel vor, die einen Rasthaken ausbildet, der beispielsweise mit dem Gehäuse des Kraftfahrzeugschlosses verrastend in Eingriff bringbar ist. Die Ausgestaltungsform der Rastverbindung ist natürlich nicht beschränkt, sondern an die jeweilige Lage des Deckels bzw. den zur Verfügung stehenden Bauraum am jeweiligen Kraftfahrzeugschloss anpassbar auszugestalten. In dieser Ausführungsform kann somit der Deckel leicht während der Montage ergriffen werden, dann formschlüssig mit dem Befestigungsmittel in Eingriff gebracht werden und letztlich durch die Rastkontur oder das Rastmittel fest mit dem Kraftfahrzeugschloss verbunden werden. Zur Montage des Bowdenzugs bzw. des Bowdenzugendes am Kraftfahrzeugschloss sind folglich keine weiteren Montagemittel notwendig. Dies reduziert die Anzahl der Bauteile und beschleunigt die Montage, was wiederum einen Kostenvorteil in Bezug auf die Montage darstellt. Natürlich können auch zwei oder mehr Rastmittel am Deckel ausgebildet oder mit dem Deckel zusammenwirken, um ein sicheres Positionieren des Deckels und eine sichere Befestigung des Bowdenzugs am Kraftfahrzeugschloss zu gewährleisten.

Das Verrasten mittels der Rasthaken stellt eine vorteilhafte Alternative dar, die als lösbare Variante ein erneutes Einstellen, zum Beispiel zu Wartungszwecken, ermöglicht. Vorstellbar ist es aber auch, dass der Deckel nach einem Verrasten unlösbar mit dem Kunststoffgehäuse des Kraftfahrzeugschlosses verbindbar ist. So kann beispielsweise der verrastete mittels eines Infrarotschweißens unlösbar mit dem Gehäuse verbunden werden. Alternativ ist beispielsweise auch ein Heißprägen, das heißt ein Umformen zumindest eines Teilbereichs des Deckels gemäß einer Ausführungsform der Erfindung vorstellbar.

Kommt der Montagebereich des Bowdenzugs in einem Kraftfahrzeug zum Einsatz, wobei der Montagebereich äußeren Umwelteinflüssen unterliegt, so ist es weiterhin vorstellbar, dass am Deckel eine Dichtung ausbildbar ist, die den Montagebereich des freien Endes des Bowdenzugmantels dichtend abschließen kann. Dem Deckel kommt somit eine Mehrzahl von Funktionen zu. Einerseits muss der Deckel durch die Anbindung eine Beweglichkeit des Deckels bereitstellen, darüber hinaus kann mittels des Deckels ein Festlegen des Befestigungsmittels erfolgen und andererseits kann mittels des Deckels eine auch dichtende Fixierung des Deckels am Kraftfahrzeugschloss hergestellt werden. Es kann somit mit einer minimalen Anzahl von Bauteilen ein sicheres Montieren mit minimalem Verfahrensaufwand bereitgestellt werden.

Nachfolgend wird die Erfindung unter Bezugnahme auf die anliegende Zeichnung anhand eines bevorzugten Ausführungsbeispiels näher erläutert. Es gilt jedoch der Grundsatz, dass das Ausführungsbeispiel die Erfindung nicht beschränkt, sondern lediglich eine vorteilhafte Ausgestaltungsform darstellt.

Es zeigt:

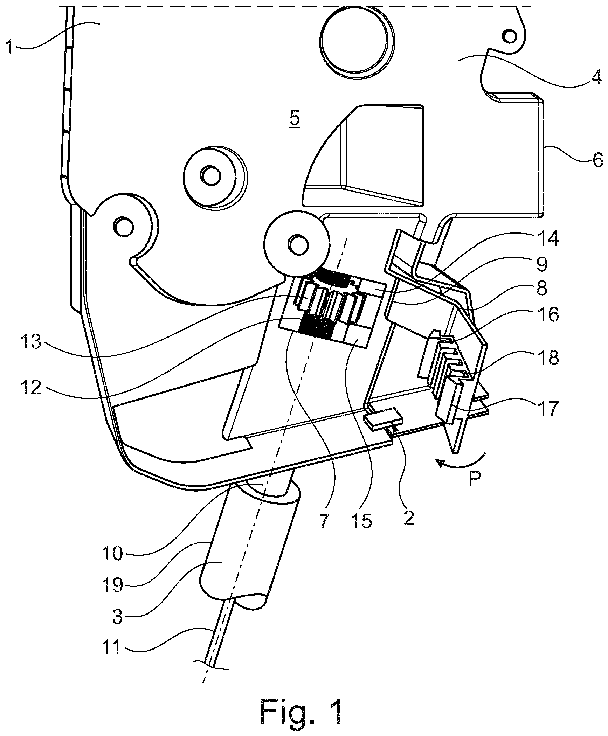

Figur 1 eine dreidimensionale Ansicht auf einen Teil eines Kraftfahrzeugschlossgehäuses im Montagebereich eines Bowdenzugs mit einem als Einstellschraube ausgeführten Befestigungsmittel und einem mittels eines Filmscharniers am Gehäuse des Kraftfahrzeugschlosses befestigten Deckel.

In der Figur 1 ist eine dreidimensionale Ansicht auf ein Kraftfahrzeugschloss 1 wiedergegeben. Gezeigt ist ein Teil des Montagebereichs 2 des Kraftfahrzeugschlosses 1 und insbesondere der Bereich, in dem der Bowdenzug 3 mit dem Kraftfahrzeugschloss 1 verbunden bzw. montiert wird. Das Kraftfahrzeugschloss 1 weist ein Gehäuse 4 auf, wobei die Ansicht auf einen Gehäusedeckel 5 wiedergegeben ist. Der Gehäusedeckel 5 umfasst eine Steckerbuchse 6, eine Montageöffnung 7 und einen einstückig mit dem Gehäusedeckel ausgebildeten Deckel 8. Der Deckel 8 ist mittels eines Filmscharniers 9 bewegbar am Gehäuse 4 des Kraftfahrzeugschlosses 1 befestigt. In diesem Ausführungsbeispiel ist der Deckel 8 einstückig mit dem Gehäusedeckel 5 ausgebildet. Der Bowdenzug 3 ist in einer montierten Position wiedergegeben.

Der Bowdenzug 3 weist einen Bowdenzugmantel 10 sowie eine Bowdenzugseele 11 auf. Die Bowdenzugseele 11 ist beispielsweise Teil einer Außenbetätigung für das Kraftfahrzeugschloss 1. Der Bowdenzugmantel 10 weist ferner ein Gewinde 12 auf, wobei auf dem Gewinde eine Einstellschraube 13 montiert ist. Gewinde 12 und Einstellschraube 13 sind bevorzugt aus einem Kunststoff gefertigt, es aber erfindungsgemäß ebenfalls vorstellbar einen Zweikomponenten-Kunststoff einzusetzen. Zum Einstellen der Montageposition des Bowdenzugs 3 liegt die Einstellschraube 13 gegen eine Anschlagfläche 14 an. Die Anschlagfläche 14 ist dabei Teil des Kraftfahrzeugschlosses 1. Durch das Zusammenspiel von Einstellschraube 13, Gewinde 12 und Anschlagfläche 14 sowie einer Vorspannung aus der Bowdenzugseele 11 kann ein anschlaggenaues Positionieren des Bowdenzugs 3 in Bezug auf das Kraftfahrzeugschloss 11 erfolgen. Vorstellbar ist es aber auch, dass die Einstellschraube 13 zwischen zwei Anschlagflächen 14, 15 montiert wird, so dass der Bowdenzug 3 alleine durch ein Einstellen der Einstellschraube 13 im Zusammenspiel mit dem Gewinde 12 in Bezug auf das Kraftfahrzeugschloss 1 einstellbar ist.

Ist der Bowdenzug 3 einmal in der Montageposition in Bezug auf das Kraftfahrzeugschloss 1 eingestellt, so kann die Position der Einstellschraube 13 mittels des Deckels 8 fixiert werden. Der Deckel 8 weist dazu Rasthaken 16, 17 auf, die mit der Montageöffnung 7 in Eingriff gebracht werden können. Darüber hinaus sind Eingriffskonturen 18, in Form von Zähnen, am Deckel 8 einstückig ausgebildet, so dass ein formschlüssiger Eingriff zwischen den Eingriffskonturen 18 und der Einstellschraube 13 ermöglichbar ist. Hat der Bowdenzug 3 nun seine endgültige Montageposition erreicht, so kann mittels eines Verschwenken des Deckels 8 in Richtung des Pfeils P ein Fixieren der Einstellschraube 13 und somit des Bowdenzugs 3 erfolgen. Hierzu kann der Deckel 8 über das Filmscharnier 9 verschwenkt werden, so dass die Kontur 18 mit der Einstellschraube 13 in Eingriff gelangt. Die Rasthaken 16, 17 verrasten dann mit der Montageöffnung 7, so dass die Einstellschraube 13 in ihrer Lage fixiert wird.

Der Deckel 8 ist einstückig mit dem Gehäusedeckel 5 ausgebildet, so dass auf weitere Bauteile zur Montage des Bowdenzugs 3 verzichtet werden kann. Es kann somit einerseits ein schnelles und leichtes Montieren des Bowdenzugs 3 gewährleistet werden und gleichzeitig kann die Anzahl der zur Montage notwendigen Bauteile auf ein Minimum reduziert werden. Es wird folglich eine konstruktiv einfache und kostengünstige Möglichkeit zur Montage und Sicherung des Bowdenzugs 3 am Kraftfahrzeugschloss 1 bereitgestellt. Zur Geräuschminimierung kann der Bowdenzugmantel 10 zusätzlich eine Kunststoffummantelung 19 aufweisen, die beispielsweise eine Geräuschminimierung bei einer Bewegung des Bowdenzugs 3 dienen kann.

### Bezugszeichenliste

- 1: Kraftfahrzeugschloss
- 2: Montagebereich
- 3: Bowdenzug
- 4: Gehäuse
- 5: Gehäusedeckel
- 6: Steckerbuchse
- 7: Montageöffnung
- 8: Deckel
- 9: Filmscharnier
- 10: Bowdenzugmantel
- 11: Bowdenzugseele
- 12: Gewinde
- 13: Einstellschraube
- 14, 15: Anschlagfläche
- 16, 17: Rasthaken
- 18: Eingriffskontur
- 19: Kunststoffummantelung

- P: Pfeil

## Patentansprüche

1. Kraftfahrzeugschloss (1) aufweisend ein Gesperre mit einer Drehfalle und mindestens einer Sperrklinke, ein Kunststoffgehäuse (4, 5), einen Bowdenzug (3), wobei ein freies Ende des Bowdenzugs (3) insbesondere ein Bowdenzugmantel (10), in das Kunststoffgehäuse (4, 5) einfügbar und im Kraftfahrzeugschloss (1) montierbar ist, und ein einstellbares Befestigungsmittel (12, 13) für das freie Ende des Bowdenzugmantels (10) im Kunststoffgehäuse (4, 5), wobei zumindest ein Teil eines Montagebereichs (2) des freien Endes mittels eines bewegbar am Gehäuse (4, 5) befestigten Deckels (8) verschließbar ist, wobei der Bowdenzug (3) mittels des Deckels (8) in einer eingestellten Montageposition fixierbar ist, **dadurch gekennzeichnet, dass** das Befestigungsmittel (12, 13) als Einstellschraube (13) ausgebildet ist, wobei die Einstellschraube (13) mit einem Gewinde (12) am Bowdenzug (3) zusammenwirkt.

2. Kraftfahrzeugschloss (1) nach Anspruch 1, **dadurch gekennzeichnet, dass** eine Montageposition des freien Endes des Bowdenzugmantels (10) mittels des Befestigungsmittels (12, 13) in Bezug auf das Kraftfahrzeugschloss (1) einstellbar ist.

3. Kraftfahrzeugschloss (1) nach einem der Ansprüche 1 oder 2, **dadurch gekennzeichnet, dass** das Befestigungsmittel (12, 13) am Bowdenzug (3) angeordnet ist.

4. Kraftfahrzeugschloss (1) nach einem der Ansprüche 1 bis 3, **dadurch gekennzeichnet, dass** die Einstellschraube (13) ein umfängliches Eingriffsmittel, insbesondere eine Verzahnung, aufweist.

5. Kraftfahrzeugschloss (1) nach einem der Ansprüche 1 bis 4, **dadurch gekennzeichnet, dass** der Deckel (8) formschlüssig mit dem Befestigungsmittel (12, 13) in Eingriff bringbar ist.

6. Kraftfahrzeugschloss (1) nach einem der Ansprüche 1 bis 5, **dadurch gekennzeichnet, dass** der Deckel (8) eine Eingriffskontur (18) aufweist, die mit dem Befestigungsmittel (12, 13) in Eingriff bringbar ist.

7. Kraftfahrzeugschloss (1) nach einem der Ansprüche 1 bis 6, **dadurch gekennzeichnet, dass** die Eingriffskontur (18) einstückig mit dem Deckel (8) ausgebildet ist.

8. Kraftfahrzeugschloss (1) nach einem der Ansprüche 1 bis 7, **dadurch gekennzeichnet, dass** der Deckel (8) mit dem Kunststoffgehäuse (4, 5) des Kraftfahrzeugschlosses (1), insbesondere mittels Rasthaken (16, 17), verrastbar ist.

9. Kraftfahrzeugschloss (1) nach einem der Ansprüche 1 bis 8, **dadurch gekennzeichnet, dass** das Befestigungsmittel (12, 13) aus Kunststoff gebildet ist.

## Claims

1. Motor vehicle latch (1) comprising a locking mechanism that has a catch and at least one pawl, a plastics housing (4, 5), a Bowden cable (3), it being possible for a free end of the Bowden cable (3), in particular a Bowden cable sheath (10), to be inserted into the plastics housing (4, 5) and to be mounted in the motor vehicle latch (1), and an adjustable fastening means (12, 13) for the free end of the Bowden cable sheath (10) in the plastics housing (4, 5), it being possible for at least one part of a mounting region (2) of the free end to be closed by means of a cover (8) which is fastened to the housing (4, 5) so as to be movable, it being possible for the Bowden cable (3) to be secured in a set mounting position by means of the cover (8), **characterized in that** the fastening means (12, 13) is in the form of an adjusting screw (13), the adjusting screw (13) interacting with a thread (12) on the Bowden cable (3).

2. Motor vehicle latch (1) according to claim 1, **characterized in that** a mounting position of the free end of the Bowden cable sheath (10) can be adjusted with respect to the motor vehicle latch (1) by means of the fastening means (12, 13).

3. Motor vehicle latch (1) according to either claim 1 or claim 2,
**characterized in that** the fastening means (12, 13) is arranged on the Bowden cable (3).

4. Motor vehicle latch (1) according to any of claims 1 to 3,
**characterized in that** the adjusting screw (13) has a circumferential engagement means, in particular a toothing.

5. Motor vehicle latch (1) according to any of claims 1 to 4,
**characterized in that** the cover (8) can be brought into engagement with the fastening means (12, 13) in an interlocking manner.

6. Motor vehicle latch (1) according to any of claims 1 to 5,
**characterized in that** the cover (8) has an engagement contour (18) which can be brought into engagement with the fastening means (12, 13).

7. Motor vehicle latch (1) according to any of claims 1 to 6,
**characterized in that** the engagement contour (18) is formed in one piece with the cover (8).

8. Motor vehicle latch (1) according to any of claims 1 to 7,
**characterized in that** the cover (8) can be latched to the plastics housing (4, 5) of the motor vehicle latch (1), in particular by means of latching hooks (16, 17).

9. Motor vehicle latch (1) according to any of claims 1 to 8,
**characterized in that** the fastening means (12, 13) can be formed of plastics material.

## Revendications

1. Serrure de véhicule automobile (1) présentant un mécanisme de verrouillage comportant un loquet rotatif et au moins un cliquet de verrouillage, un boîtier en matière plastique (4, 5), un câble Bowden (3), une extrémité libre du câble Bowden (3), en particulier une gaine de câble Bowden (10), pouvant être insérée dans le boîtier en matière plastique (4, 5) et montée dans la serrure de véhicule automobile (1), et un moyen de fixation (12, 13) réglable pour l'extrémité libre de la gaine de câble Bowden (10) dans le boîtier en matière plastique (4, 5), au moins une partie d'une zone de montage (2) de l'extrémité libre pouvant être fermée au moyen d'un couvercle (8) fixé de manière à pouvoir être déplacé au boîtier (4, 5), le câble Bowden (3) pouvant être fixé dans une position de montage réglée au moyen du couvercle (8), **caractérisée en ce que** le moyen de fixation (12, 13) est réalisé sous la forme d'une vis de réglage (13), la vis de réglage (13) coopérant avec un filetage (12) au niveau du câble Bowden (3).

2. Serrure de véhicule automobile (1) selon la revendication 1,
**caractérisée en ce qu'**une position de montage de l'extrémité libre de la gaine de câble Bowden (10) est réglable par rapport à la serrure de véhicule automobile (1) à l'aide du moyen de fixation (12, 13).

3. Serrure de véhicule automobile (1) selon l'une des revendications 1 ou 2, **caractérisée en ce que** le moyen de fixation (12, 13) est disposé au niveau du câble Bowden (3).

4. Serrure de véhicule automobile (1) selon l'une des revendications 1 à 3, **caractérisée en ce que** la vis de réglage (13) présente un moyen de prise périphérique, en particulier une denture.

5. Serrure de véhicule automobile (1) selon l'une des revendications 1 à 4, **caractérisée en ce que** le couvercle (8) peut être amené en prise par complémentarité de forme avec le moyen de fixation (12, 13).

6. Serrure de véhicule automobile (1) selon l'une des revendications 1 à 5, **caractérisée en ce que** le couvercle (8) présente un contour de prise (18) pouvant être amené en prise avec le moyen de fixation (12, 13).

7. Serrure de véhicule automobile (1) selon l'une des revendications 1 à 6, **caractérisée en ce que** le contour de prise (18) est réalisé d'un seul tenant avec le couvercle (8).

8. Serrure de véhicule automobile (1) selon l'une des revendications 1 à 7, **caractérisée en ce que** le couvercle (8) peut être encliqueté avec le boîtier en matière plastique (4, 5) de la serrure de véhicule automobile (1), en particulier au moyen de crochets d'encliquetage (16, 17).

9. Serrure de véhicule automobile (1) selon l'une des revendications 1 à 8, **caractérisée en ce que** le moyen de fixation (12, 13) est constitué de matière plastique.
